# EUROPEAN PATENT APPLICATION

(11) **EP 2 280 487 A1**
(43) Date of publication of application: **02.02.2011**
(21) Application number: 09165049.9
(22) Date of filing: 09.07.2009
(51) Int. Cl.: H04B 1/00, H01Q 1/44

(54) **Mobile wireless receiver front end with multiple inputs**

(71) Applicant: ST-Ericsson SA, 1228 Plan-les-Ouates (CH)
(72) Inventor: The designation of the inventor has not yet been filed
(74) Representative: Bird, William Edward

(57) **Abstract**

A front end circuit (10) for a receiver for a mobile device (90), for coupling selected frequencies received by a first antenna to a pair of inputs of an amplifier (40), has a first path (60) for a signal to one of the inputs from the antenna, and a second path (70) for coupling at the same time a second antenna such as a conductor (50) external to the device apart from the first antenna, to a second of the inputs. The second path can be an RF ground plane. The first path can be direct without a switch in the first path. The receiver can have a single amplifier.

## Description

### Field of the invention:

This invention relates to front end circuits, to mobile wireless devices having such front end circuits, and to methods of using or making such apparatus.

### Background of the invention

It is known to provide front end circuits for coupling an antenna to an amplifier in a wireless receiver. The front end circuit can match the impedance of the antenna to improve the reception, and can filter out unwanted frequencies for example. Application examples can include mobile devices such as hand held radios or mobile phones having an FM radio receiver, in which a headphone socket is coupled to FM receiver circuitry as well as audio output circuits. This enables the speaker wires to be used as an external antenna to enhance the reception, and enables the device to be smaller by dispensing with a built in antenna. This is particularly useful for receiving wavelengths such as those used for FM broadcasts where a typical quarter wave antenna would be larger than the dimensions of the mobile device. In these known devices, there are often (in the case of stereo speakers) three wires to the speakers, a left signal, a right signal and a ground wire. One of them is connected as a monopole antenna, by coupling it to one of the two inputs of an amplifier. The other input of the amplifier is connected to a reference potential (ground plane). This reference potential also serves as the reference potential for the monopole antenna.

It is also known to provide receivers having multiple antennas, either for diversity reception or for receiving different wavelengths for example. In such cases, switches may be provided in the front end, or multiple amplifiers can be used and switches or other combining circuitry used after the multiple amplifiers.

### Summary of the Invention:

An object of the invention is to provide improved apparatus or methods, especially front end circuits, mobile wireless devices having such front end circuits, and/or methods of using or making such apparatus. According to a first aspect, the invention provides:
A front end circuit for a receiver for a mobile device, for coupling selected frequencies received by a first antenna to a pair of inputs of an amplifier, the front end circuit having a first path for a signal to one of the inputs from the antenna, and having a second path for coupling at the same time a second antenna, to a second of the inputs.
This arrangement is distinguished by having the two paths fed to the inputs of the amplifier at the same time from different sources, rather than having two paths from the same source, or rather than having two paths switched alternately into one input of the amplifier. Conventionally the second path can be a reference potential (ground plane), which is more of an implicit connection. The new arrangement can enable better reception, or enable a smaller device for a given level of reception.

The present invention also provides a method of operating a front end circuit (10) for a receiver for a mobile device , the method comprising:
coupling selected frequencies received by a first antenna to a pair of inputs of an amplifier,
supplying a signal to one of the inputs from the antenna, and
coupling at the same time a second antenna external to the device apart from the first antenna, to a second of the inputs. Embodiments of the invention can have any other features added, some such additional features are set out in dependent claims and described in more detail below.

Other aspects of the invention can include corresponding integrated circuits, and corresponding methods. Any of the additional features can be combined together and combined with any of the aspects. Other advantages will be apparent to those skilled in the art, especially over other prior art. Numerous variations and modifications can be made without departing from the claims of the present invention. Therefore, it should be clearly understood that the form of the present invention is illustrative only and is not intended to limit the scope of the present invention.

### Brief Description of the Drawings:

How the present invention may be put into effect will now be described by way of example with reference to the appended drawings, in which:
Fig 1 shows a schematic view of a known front end,
Fig 2 shows a schematic view of a front end circuit according to an embodiment,
Fig 3 shows schematic view of a front end circuit according to another embodiment, and
Fig 4 shows a graph of audio SNR versus E field for an embodiment.

### Detailed Description of Embodiments:

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by digital logic implemented by standard or application specific integrated circuit parts or by discrete components or by any other means of carrying out the function. Thus, a processor with the necessary instructions for carrying out such a method or element of a method can form a means for carrying out the method or element of a method except where stated otherwise. Furthermore, an element described herein of an apparatus embodiment is an example of a means for carrying out the function performed by the element for the purpose of carrying out the invention. References to a signal can encompass any kind of signal in any medium, and so can encompass an electrical or optical or wireless signal or other signal for example.

In the description provided herein, numerous specific details are set forth. However, it is understood that embodiments of the invention may be practiced without these specific details. In other instances, well-known methods, structures and techniques have not been shown in detail in order not to obscure an understanding of this description.

References to front end circuits can encompass any type of circuit for coupling an antenna to an amplifier or to other downstream circuitry in a wireless receiver.

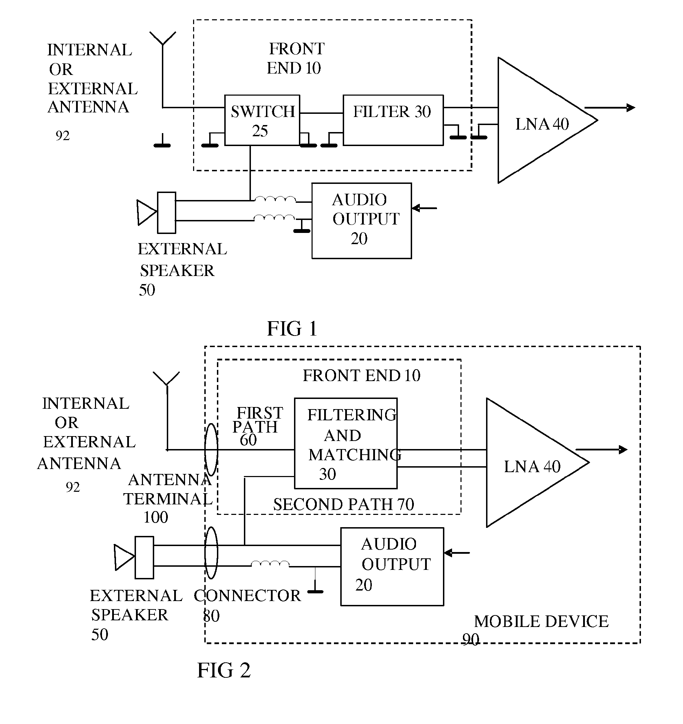

### Introduction to some issues addressed by some of the embodiments, figure 1

By way of introduction to the embodiments and their features, some drawbacks of known circuits will be discussed briefly. If a single LNA is used, multiple antenna are feasible if a switch is used. But this introduces undesirable losses and adds to the component count and so adds costs also. Figure 1 shows this in more detail. In this example, an internal or external antenna 92 is shown feeding a front end 10 having a switch 25. This selects two paths to feed into the amplifier 40, either from the antenna 92, or from leads of an external speaker 50, which is also used for audio output from audio output circuit 20. This external speaker can be connected via a connector. A filter can be provided in the front end for selecting frequencies from the antenna, and for matching the impedance of the antenna. Filter means, especially low pass filter means that can be, for example, inductors or inductor circuits are shown next to the audio output circuit to represent any kind of filtering for separating the audio signals at e.g. < 20 kHz from the VHF/FM RF signals at e.g. > 70 MHz. Notably in this figure, the second input to the amplifier is connected to ground as shown. Ground connections for the antenna, switch and filter are also shown.

Another option is to use multiple amplifiers rather than switches, but again this would add to the complexity and therefore add to the costs, in the sense of circuit area, test costs, yield loss and so on.

### Fig 2, first embodiment

Figure 2 shows an example of a front end circuit 10 for a receiver for a mobile device 90, for coupling selected frequencies received by a first antenna 92 to a pair of inputs of an amplifier 40. The front end circuit has a first path 60 for a signal to one of the inputs from the antenna, and a second path 70 for coupling at the same time a second antenna in the form of for example an external conductor such as leads to a speaker external to the device. This is located apart from the first antenna, and coupled to a second of the inputs of the amplifier. As before, a filtering and matching part 30 is shown in the paths to the amplifier. The antenna 92 can be internal or external, in the latter case an antenna terminal 100 is provided. The amplifier can be a differential input amplifier in which case no ground reference is provided for the amplifier, though a ground plane can still be provided for shielding purposes. The amplifier in the form of a low noise amplifier LNA 40 may be regarded as part of the device but not part of the front end, or it may be included in the front end.

The leads to the external speaker 50 are coupled into the device by a connector 80. Any kind of suitable filtering device, e.g. a low pass filter having inductors or inductor circuits could be used on the leads to the audio output circuit 20 to separate the RF from the audio frequencies, as mentioned above in relation to figure 1.

### Some additional features:

The second path can be in the form of an RF ground plane. This is typically separate from a non RF ground plane of the device. The second path can also be in the form of an RF ground plane which is not separate from the non-RF ground plane of the device.

The first path can be direct without a switch in the first path. Alternatively a switch could be included if desirable in some devices, for example to provide a choice of antennas for different conditions, or a choice of bands, or to provide diversity reception.

The receiver can have a single amplifier.

The circuit can have analog components in the first path and between the paths, to form a band pass filter. The circuit can have analog components in the first path to provide impedance matching with the first antenna. The front end can be implemented as part or all of an integrated circuit using conventional RF techniques, or can be implemented as discrete components on a circuit board, or combinations of these or other ways.

The device can be a handheld mobile device having the receiver described. It can be battery powered for example. The first antenna can comprise an antenna internal to the mobile device. This can be more compact for example. The mobile device can have a connector for connecting the second antenna in the form of an external conductor to the mobile device, the second path being coupled to the connector.

The mobile device connector can also be coupled to audio outputs so as to be suitable for connecting an external audio device so that part of the external audio device can serve as the second antenna. This can avoid the need for an additional connector. Suitable means to separate audio-frequency signals from RF-frequency signals may need to be included. Filter means, especially low pass filter means that can be, for example, inductors or inductor circuits can be used for for separating audio signals at e.g. < 20 kHz from RF signals such as in the range 30 kHz to 300 GHz, for example VHF/FM RF signals at e.g. > 70 MHz.

The receiver can comprise a VHF-frequency receiver, though other wavelengths are feasible.

The mobile device can comprise a computing device such as a laptop or notebook computer, or any device incorporating these for example.

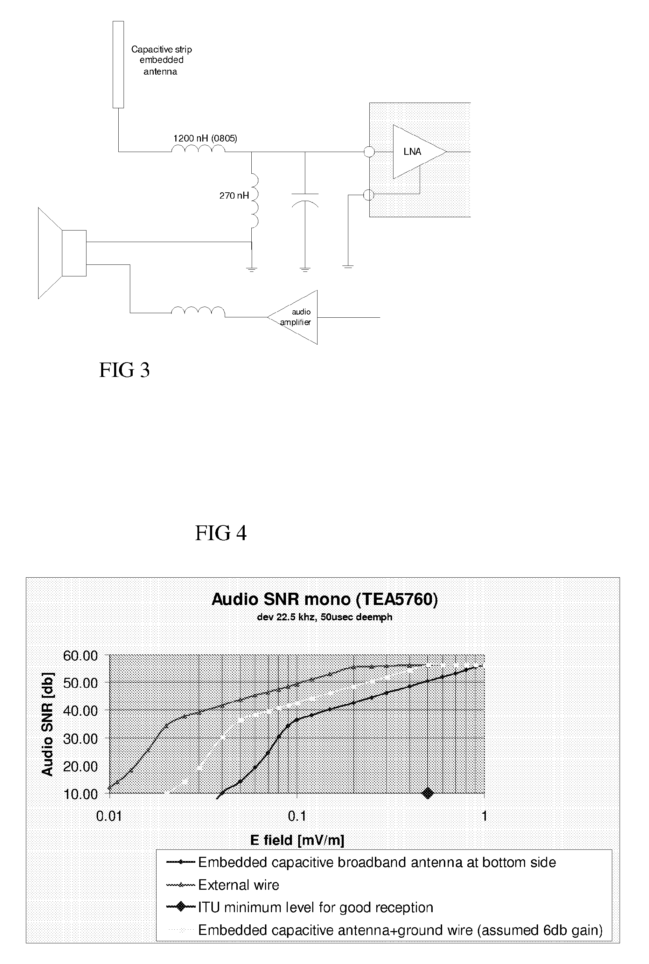

### Fig 3 another embodiment

Figure 3 shows a schematic view of an example of a single-LNA switchless RF reception front end with multiple antenna terminals. The features discussed can be applied to a wireless terminal (piece of equipment) which is used for the reception (and possibly transmission) of frequency-modulated radio signals in the commercial broadcast band (in Western Europe and North America, between 87.5 MHz and 108 MHz; in Japan, between 76 MHz and 92 MHz). It can be arranged with a single LNA, without switches in the RF signal path, and with the possibility to connect either a small antenna (either a capacitive strip or patch, or an inductive loop), or a wire antenna (for instance the wire leading to the audio headset).

The figure shows a capacitive strip embedded antenna coupled to the LNA via a first path. A series coupled inductor of 1200nH for example leads to the amplifier. This is used to match the impedance of the antenna. A second path is shown leading from a headset wire to a groundplane which is used as a reference by the LNA, and so is effectively a second input of the LNA. A shunt capacitor is shown, across the two inputs. A second headset wire is shown, which is not connected to the receiver. Another inductor of 270nH for example is also shown in parallel with the shunt capacitor. These analog components are intended to provide a bandpass filter, as well as matching the impedance of the antenna. Other arrangements of components can be envisaged to achieve similar effects. The values of the components and their Q factors may be used to try to provide the desired filtering and to provide a flat amplitude response in band.

### Some benefits:

The small antennas can be small enough to fit in the enclosure of a piece of handheld equipment (for instance a cellular phone or a portable multimedia player);
The wire antenna typically has a higher conversion from incident EM radiation to conducted power, to deliver to the RF reception frontend. This can improve sensitivity in weak-signal conditions.
The single LNA input reduces circuit complexity and pincount for the RF integrated circuit of which it is a part, compared to a similar circuit having multiple LNAs.
The absence of switches in the RF signal path reduces signal losses, which would deteriorate sensitivity. Moreover it reduces a Bill of Material (BoM), that is, it reduces component count.
At least some embodiments can help reduce or solve the problem of excess circuit complexity (due to extra LNA, switches, or matching or DC blocking networks) which are a result of the combination of having a physically small antenna (when best-in-class sensitivity is not required) or a more effective antenna (when best-in-class sensitivity is required)

### Fig 4, expected performance of the embodiment of fig 3

Fig 4 shows a graph of SNR versus E field strength (when compared to a small capacitive strip or patch antenna without having a headset wire connected to extend the ground plane).

Outdoors 1m above ground level an increase of E received could be 14dB at 100MHz. Indoors at 1m above floor level an increase of E received could be 6dB at 100 MHz.

Other variations can be envisaged within the scope of the claims.

## Claims

1. A front end circuit (10) for a receiver for a mobile device (90), for coupling selected frequencies received by a first antenna to a pair of inputs of an amplifier (40), the front end circuit having a first path (60) for a signal to one of the inputs from the antenna, and having a second path (70) for coupling at the same time a second antenna (50) external to the device apart from the first antenna, to a second of the inputs.

2. The circuit of claim 1, the second path comprising an RF ground plane.

3. The circuit of claim 1 or 2, the first path being direct without a switch in the first path.

4. The circuit of any preceding claim, the receiver having a single amplifier.

5. The circuit of any preceding claim, and having analog components in the first path and between the paths, to form a band pass filter.

6. The circuit of any preceding claim, and having analog components (30) in the first path to provide impedance matching with the first antenna.

7. The circuit of any preceding claim having low pass filter means for separating audio signals from RF signals.

8. A mobile device having the receiver of any preceding claim.

9. The mobile device of claim 8, the first antenna comprising an antenna internal to the mobile device.

10. The mobile device of claim 8 or 9, and having a connector (80) for connecting the second antenna to the mobile device, the second path being coupled to the connector.

11. The mobile device of claim 10, the connector also being coupled to audio outputs so as to be suitable for connecting an external audio device (50) so that part of the external audio device can serve as the second antenna.

12. The mobile device of claim 8 or any claim dependent on claim 8, the receiver comprising an FM receiver.

13. The mobile device of claim 8 or any claim dependent on claim 8, comprising a computing device.

14. A method of operating a front end circuit (10) for a receiver for a mobile device (90), the method comprising:
coupling selected frequencies received by a first antenna to a pair of inputs of an amplifier (40),
supplying a signal to one of the inputs from the antenna, and
coupling at the same time a second antenna (50) external to the device apart from the first antenna, to a second of the inputs.
